# EUROPÄISCHE PATENTANMELDUNG

(11) **EP 2 253 564 A1**
(43) Veröffentlichungstag der Anmeldung: **24.11.2010**
(21) Anmeldenummer: 09015702.5
(22) Anmeldetag: 18.12.2009
(51) Int. Cl.: B65F 1/10, B65F 1/14, B02C 18/00, B02C 18/22

(54) **Sammelbehälter für zu sammelnde Güter**

(30) Priorität: 19.05.2009 DE 102009022004
(71) Anmelder: VFH Mandausch GmbH, 60314 Frankfurt (DE)
(72) Erfinder: Garten, Peter, D-60389 Frankfurt (DE); Gadermann, Peter, 63694 Limeshain (DE)
(74) Vertreter: Katscher Habermann Patentanwälte

(57) **Zusammenfassung**

Ein Sammelbehälter (1) für zu sammelnde Güter wie beispielsweise Informationsträger, insbesondere vertrauliche Dokumente und Ordner, weist eine Einfüllöffnung (3), eine unterhalb der Einfüllöffnung (3) angeordnete Schreddervorrichtung (7) und eine zwischen der Einfüllöffnung (3) und der Schreddervorrichtung (7) angeordnete schaltbare Ablenkvorrichtung (13), die zwischen einer ersten Betriebsstellung, bei der die zu sammelnden Güter der Schreddervorrichtung (7) zugeführt werden, und einer zweiten Betriebsstellung, bei der die zu sammelnden Güter an der Schreddervorrichtung (7) vorbei dem Sammelbehälter (1) zugeführt werden, umgeschaltet werden kann.

## Beschreibung

Die Erfindung betrifft einen Sammelbehälter für zu sammelnde Güter wie beispielsweise Informationsträger, insbesondere vertrauliche Dokumente und Ordner, mit einer Einfüllöffnung und mit einer unterhalb der Einfüllöffnung angeordneten Schreddervorrichtung.

Aus der Praxis sind verschiedene Verfahren und Systeme zum Einsammeln und Transportieren unterschiedlicher Materialien zu einer zentralen Sammelstelle bekannt, um dort die eingesammelten Materialien zentral weiterverarbeiten, lagern oder recyceln zu können.

Bei den bekannten Wertstoff-Verwertungsverfahren werden in großer Anzahl aufgestellte Wertstoffcontainer bereitgehalten, in denen beispielsweise Glas, Papier, Kunststoffe oder andere Wertstoffe dezentral gesammelt werden können. Die Wertstoffe werden in zeitlichen Abständen aus den dezentral bereitgehaltenen Wertstoffcontainern in einen transportablen Sammelbehälter umgefüllt und zu einer zentralen Sammelstelle, beispielsweise zu einer Recyclinganlage transportiert. Das Fassungsvermögen der transportablen Sammelbehälter entspricht üblicherweise dem Inhalt mehrerer Wertstoffcontainer.

Es sind auch transportable Sammelbehälter aus der Praxis bekannt, die in besonderer Weise für die Aufnahme und den Transport von vertraulichen Dokumenten und anderen Informationsträgern geeignet sind, die vor einem unbefugten Zugriff durch unberechtigte Dritte geschützt werden sollen. Dabei wird bei den in der Praxis bekannten Transportverfahren bzw. bei den Sammelbehältern insbesondere darauf geachtet, dass die in üblicherweise verschlossenen Einzelbehältern bereitgestellten vertraulichen Dokumente und Informationsträger möglichst zuverlässig und ohne externe Mitwirkung oder Zugriffsmöglichkeit aus den Einzelbehältern in den üblicherweise auf einem Fahrzeug befindlichen Sammelbehälter umgefüllt werden können.

Aus der Praxis sind verschiedene Sammelfahrzeuge mit einem Sammelbehälter bekannt, der eine Schleuse oder Sicherheitsabsperrung aufweist, innerhalb der die zu entleerenden Einzelbehälter aufgenommen und in den Sammelbehälter umgefüllt werden können. Ein System bestehend aus einem derartigen Sammelbehälter sowie aus mehreren verschließbaren Einzelbehältern wird beispielsweise in DE 100 28 803 A1 beschrieben.

Aus der Praxis sind weiterhin Sammelbehälter für verschiedene zu sammelnde Güter bekannt, die mit einer unterhalb der Einfüllöffnung angeordneten Schreddervorrichtung ausgestattet sind. Mit einer in dem Sammelbehälter angeordneten Schreddervorrichtung können vertrauliche Dokumente oder andere Informationsträger während des Einfüllvorgangs in den Sammelbehälter zerkleinert werden, so dass bereits unmittelbar nach einem Umfüllen der vertraulichen Dokumente in den Sammelbehälter eine erhöhte Sicherheit gegen unbefugte Einsichtnahme oder Entwendung der vertraulichen Unterlagen bewirkt werden kann. Die Verwendung einer Schreddervorrichtung ist jedoch zeitaufwändig und verlängert den Umfüllungsvorgang der Informationsträger in den Sammelbehälter, wodurch sich auch die für das Einsammeln und den Abtransport der vertraulichen Unterlagen anfallenden Kosten erhöhen. Aus diesem Grund bieten viele auf die Einsammlung und Vernichtung vertraulicher Unterlagen und Informationsträger spezialisierte Unternehmen alternativ entweder ein kostengünstiges Einsammeln und erstmaliges Schreddern der vertraulichen Dokumente in einer zentralen Schredderanlage oder aber ein zeitaufwändigeres und kostenintensiveres erstmaliges Schreddern bereits während des Umfüllens der vertraulichen Dokumente in den Sammelbehälter und eine anschließende endgültige Vernichtung der schon vorgeschredderten Unterlagen in der zentralen Schredderanlage an. In Abhängigkeit des von einem Kunden gewünschten Verfahrens wird dann entweder ein Fahrzeug mit einem Sammelbehälter ohne Schreddervorrichtung oder ein Fahrzeug mit einem Sammelbehälter mit Schreddervorrichtung zu dem Kunden entsandt. Das diese Dienstleistungen anbietende Unternehmen muss zwei verschiedene Fahrzeuge bzw. transportable Sammelbehälter mit und ohne Schreddervorrichtung verfügbar halten und bedingt durch unterschiedliche Kundenwünsche einen logistischen Mehraufwand in Kauf nehmen.

Es wird als eine Aufgabe der vorliegenden Erfindung angesehen, einen Sammelbehälter so auszugestalten, dass mit möglichst einfachen konstruktiven Mitteln die einzusammelnden Güter wahlweise geschreddert oder ungeschreddert in den Sammelbehälter eingefüllt werden können, wobei der in dem Sammelbehälter verfügbare Nutzraum möglichst groß sein sollte.

Diese Aufgabe wird erfindungsgemäß dadurch gelöst, dass zwischen der Einfüllöffnung und der Schreddervorrichtung eine schaltbare Ablenkvorrichtung angeordnet ist, die zwischen einer ersten Betriebsstellung, bei der die zu sammelnden Güter der Schreddervorrichtung zugeführt werden, und einer zweiten Betriebsstellung, bei der die sammelnden Güter an der Schreddervorrichtung vorbei dem Sammelbehälter zugeführt werden, umgeschaltet werden kann. Die schaltbare Ablenkvorrichtung kann beispielsweise als verstellbare Weiche, als Pendelklappe oder als verlagerbare Schütte bzw. Rutsche ausgestaltet sein. Je nach der Betriebsstellung der Ablenkvorrichtung können die durch die Einfüllöffnung in den Sammelbehälter eingefüllten Dokumente, Ordner und sonstigen Informationsträger im Wesentlichen frei fallend der unterhalb der Einfüllöffnung angeordneten Schreddervorrichtung zugeführt werden oder aber beispielsweise über eine schräg angeordnete Schütte bzw. Rutsche seitlich an der Schreddervorrichtung vorbei abgelenkt und unzerkleinert in den Nutzraum des Sammelbehälters befördert werden.

Üblicherweise befindet sich zwischen der Einfüllöffnung und der Schreddervorrichtung ausreichend Platz zum Anbringen und Anordnen einer geeigneten Ablenkvorrichtung, der nicht anderweitig nutzbar ist. Die schaltbare Ablenkvorrichtung muss im Falle einer einfachen und gegebenenfalls manuell betätigbaren Ausgestaltung lediglich wenige beweglich gelagerte Einzelteile aufweisen, so dass kein nennenswert erhöhter Material- und Herstellungsaufwand für die Ablenkeinrichtung anfällt und ein zuverlässiger und weitgehend wartungsfreier Betrieb möglich ist.

Zudem kann die schaltbare Ablenkvorrichtung derart ausgestaltet sein oder ohne größeren Aufwand an verschiedene Sammelbehälter mit unterschiedlichen Schreddervorrichtungen angepasst werden, dass auch für bereits hergestellte und in Betrieb befindliche Sammelbehälter mit einer Schreddervorrichtung eine Nachrüstung mit einer schaltbaren Ablenkvorrichtung denkbar und wirtschaftlich sinnvoll ist.

Vorzugsweise ist vorgesehen, dass die schaltbare Ablenkvorrichtung mindestens eine schwenkbar gelagerte Ablenkplatte aufweist. Die Ablenkvorrichtung kann beispielsweise einen zwischen der Einfüllöffnung und der Schreddervorrichtung angeordneten Schacht mit mehreren Schachtwänden aufweisen, von denen eine Schachtwand als schwenkbar gelagerte Ablenkplatte ausgestaltet ist. Die Ablenkplatte kann je nach Wunsch entweder im Wesentlichen vertikal angeordnet sein und zusammen mit den anderen Schachtwänden den Schacht für die Zuführung der eingefüllten Güter zu der Schreddervorrichtung sorgen oder in einer verschwenkten, schrägen Anordnung quer über der Schreddervorrichtung die eingefüllten Güter an der Schreddervorrichtung vorbei seitlich in den Sammelbehälter abzulenken bzw. zu befördern.

Es ist vorgesehen, dass die schaltbare Ablenkvorrichtung zwei oder mehr schwenkbar gelagerte Ablenkplatten aufweist.

Die zur Umlenkung der eingefüllten Dokumente und Informationsträger um die Schreddervorrichtung herum erforderliche schräge Ebene bzw. Rutsche kann durch mehrere in geeigneter Weise angeordnete und schwenkbar gelagerte Ablenkplatten gebildet werden. Die Gesamtlänge der schrägen Ebene bzw. Rutsche kann in diesem Fall die Abmessungen einer einzelnen Ablenkplatte übersteigen, so dass längere Rutschen gebildet werden können oder aber die Gesamthöhe der schaltbaren Ablenkvorrichtung bei gleichbleibender Länge der Rutsche bzw. der schrägen Ebene geringer sein kann. Mehrere schwenkbare gelagerte Ablenkplatten können schneller und zuverlässiger zwischen der ersten Betriebsstellung und der zweiten Betriebsstellung verstellt bzw. umgeschaltet werden. Zudem sind für die einzelnen Ablenkplatten lediglich geringere Haltekräfte als bei Verwendung einer einzelnen, entsprechend größeren Ablenkplatte erforderlich.

Gemäß einer vorteilhaften Ausgestaltung des Erfindungsgedankens ist vorgesehen, dass die schaltbare Ablenkvorrichtung mit einem Vibrationserzeuger verbunden ist. Während eines Umfüllvorgangs und insbesondere bei einem Betrieb der Ablenkvorrichtung in der zweiten Betriebsstellung, bei der die zu sammelnden Güter an der Schreddervorrichtung vorbei dem Sammelbehälter zugeführt werden, können mittels des Vibrationserzeugers in zeitlichen Abständen oder kontinuierlich Vibrationen erzeugt werden, die eine Förderung der eingefüllten Güter durch die Ablenkvorrichtung erleichtern und beschleunigen. Um das Entlanggleiten bzw. Rutschen der Dokumente und Informationsträger längs der mit der mindestens einen Ablenkplatte gebildeten Rutsche zu unterstützen und zu beschleunigen, kann der Vibrationserzeuger entweder die gesamte Ablenkvorrichtung oder aber lediglich die eine Ablenkplatte bzw. die mehreren Ablenkplatten in Schwingungen bzw. Vibrationen versetzen.

Anstelle von oder zusätzlich zu einem Vibrationserzeuger kann in vorteilhafter Weise vorgesehen sein, dass die schaltbare Ablenkvorrichtung mindestens eine Luftdüse zum Einblasen von Druckluft in Richtung eines Förderwegs für die zu sammelnden Güter aufweist. Vorzugsweise weist die Ablenkvorrichtung mehrere, beabstandet zueinander und entlang einer Oberfläche der Ablenkplatten in Richtung des angestrebten Förderwegs ausgerichtete Luftdüsen auf, die entweder bei Bedarf oder kontinuierlich mit Druckluft aus einem Kompressor beaufschlag werden und eine Luftströmung erzeugen, die die zu sammelnden Güter durch die Ablenkvorrichtung hindurch bläst bzw. deren Beförderung unterstützt.

Bei Verwendung eines Vibrationserzeugers und/oder derartiger Luftdüsen kann die für eine zuverlässige und rasche Beförderung erforderliche Mindestneigung der Ablenkplatte bzw. der Ablenkplatten vermindert werden, wobei gleichzeitig eine zuverlässige Beförderung der eingefüllten Güter in die Schreddervorrichtung und insbesondere seitlich an der Schreddervorrichtung vorbei gewährleistet werden kann.

Um eine einfache und automatisierbare Betätigung der schaltbaren Ablenkvorrichtung zu ermöglichen ist vorgesehen, dass die schaltbare Ablenkvorrichtung elektrisch, hydraulisch oder pneumatisch betätigbar ist. Es ist ebenfalls möglich, dass die schaltbare Ablenkvorrichtung stattdessen oder vorsorglich zusätzlich manuell von außen betätigbar ist und beispielsweise durch einen geeigneten Hebelmechanismus zwischen den beiden Betriebsstellungen umgeschaltet werden kann.

Gemäß einer vorteilhaften Ausgestaltung des Erfindungsgedankens ist vorgesehen, dass die schaltbare Ablenkvorrichtung eine Steuereinrichtung zur Betätigung der Ablenkvorrichtung in Abhängigkeit von einem mittels eines Signalgebers erzeugten Schaltsignal aufweist. So können beispielsweise die in den Sammelbehälter umzufüllenden Einzelbehälter über drahtlose oder kabelgebundene Kontakte oder aber beispielsweise mittels eines Transponders ein Schaltsignal an die Steuereinrichtung übertragen, so dass automatisiert die für die Umfüllung des betreffenden Einzelbehälters vorgesehene Betriebsstellung der schaltbaren Ablenkvorrichtung vorgegeben und vorbeigeführt werden kann. Die einzelnen Befüllungsvorgänge können in diesem Fall ohne zusätzlich geforderte Interaktion mit dem Bedienpersonal durchgeführt werden, wodurch sich Fehlbedienungen vermeiden und die Zuverlässigkeit bei der Durchführung des jeweils gewünschten Befüllvorgangs erhöhen lässt.

Es ist ebenfalls vorgesehen, dass die schaltbare Ablenkvorrichtung eine Regeleinrichtung und einen oder mehrere Signalgeber zur Kontrolle und automatisierten Steuerung des Betriebs der Ablenkvorrichtung aufweist. Die jeweilige Anordnung und Ausrichtung der schwenkbaren Ablenkplatten bzw. der Betriebszustand der Ablenkvorrichtung einschließlich der optional erzeugten Vibrationen oder gerichteten Druckluftzuführung kann auf diese Weise überwacht, angezeigt und für eine automatisierte Steuerung der schaltbaren Ablenkvorrichtung verwendet werden. Es ist ebenfalls denkbar, den Einfüllvorgang beispielsweise mittels einer Videokamera zu überwachen und auf diese Weise eine zusätzliche Überprüfung durch das Bedienpersonal oder den jeweiligen Kunden zu ermöglichen.

Nachfolgend werden verschiedene Ausführungsbeispiele eines erfindungsgemäßen Sammelbehälters näher erläutert, die in der Zeichnung dargestellt sind. Es zeigt:
Fig. 1 eine schematische Darstellung eines Sammelbehälters mit einer Schreddervorrichtung und einer über der Schreddervorrichtung angeordneten schaltbaren Ablenkvorrichtung in einer ersten Betriebsstellung, bei der die zu sammelnden Güter der Schreddervorrichtung zugeführt werden,
Fig. 2 den in Fig. 1 dargestellten Sammelbehälter mit der schaltbaren Ablenkvorrichtung in einer zweiten Betriebsstellung, bei der die zu sammelnden Güter an der Schreddervorrichtung vorbei dem Sammelbehälter zugeführt werden,
Fig. 3 einen Sammelbehälter mit einer anders ausgestalteten schaltbaren Ablenkvorrichtung ebenfalls in einer zweiten Betriebsstellung.

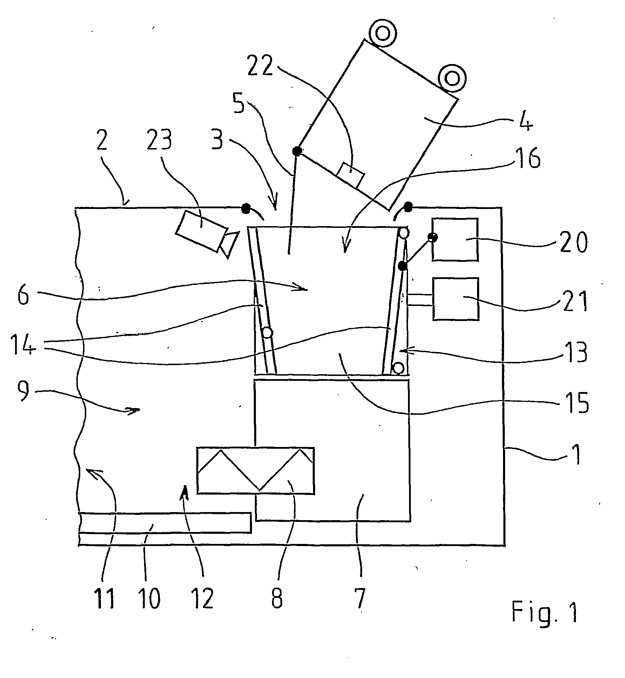

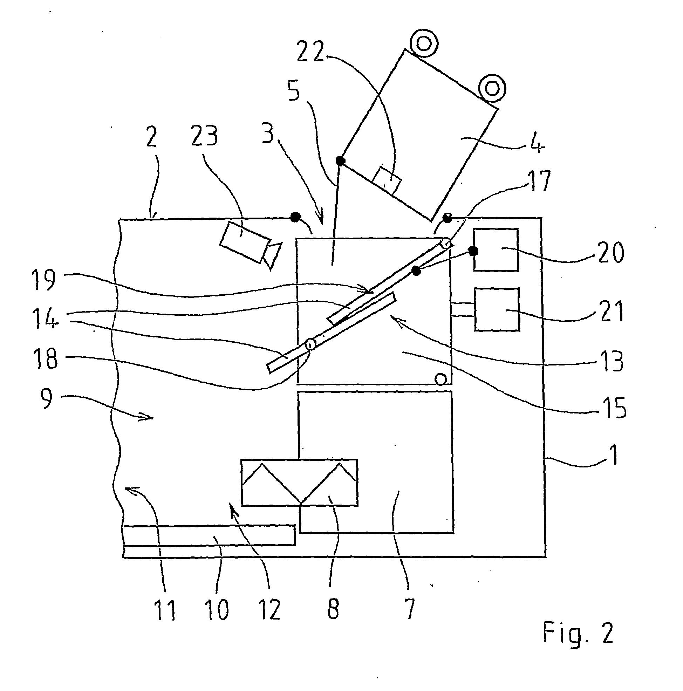

In den Fig. 1 und 2 ist schematisch ein transportabler Sammelbehälter 1 dargestellt, der an einer Oberseite 2 eine verschließbare Einfüllöffnung 3 aufweist. Durch die geöffnete Einfüllöffnung 3 kann ein Einzelbehälter 4 entleert werden. Zu diesem Zweck wird der Einzelbehälter 4 mit einer nicht dargestellten Hebelvorrichtung aufgenommen und in eine Entleer-Position oberhalb der Einfüllöffnung 3 gebracht. Bei einem Umkippen des Einzelbehälters 4 oberhalb der Einfüllöffnung 3 öffnet sich ein Verschlussdeckel 5 des Einzelbehälters 4, so dass in dem Einzelbehälter 4 befindliche Güter wie beispielsweise vertrauliche Dokumente und Ordner aus dem Einzelbehälter 4 durch die Einfüllöffnung 3 in einen Innenraum 6 des Sammelbehälters 1 fallen.

Unterhalb der Einfüllöffnung 3 befindet sich in dem Innenraum 6 des Sammelbehälters eine Schreddervorrichtung 7. Die in die Schreddervorrichtung 7 fallenden vertraulichen Dokumente und Ordner werden von der Schreddervorrichtung 7 zerkleinert und mit Hilfe einer Förderschnecke 8 in einen Nutzraum 9 des Sammelbehälters 1 gefördert. Eine Bodenfläche 10 des Nutzraums 9 weist zahlreiche Lamellen auf, die jeweils in Gruppen angeordnet und relativ zueinander verlagerbar sind, wobei durch eine geeignete Ansteuerung und Bewegung der jeweils benachbarten Lamellengruppen das in der Schreddervorrichtung zerkleinerte Material, das von der Förderschnecke 8 auf die Bodenfläche 10 gefördert wird, von der Schreddervorrichtung 7 weg in Richtung eines entgegengesetzten Endes 11 des Nutzraums 9 gefördert wird. Auf diese Weise wird erreicht, dass das aus der Förderschnecke 8 geförderte, zerkleinerte Material aus einem Bereich 12 um die Förderschnecke 8 herum in Richtung des entgegengesetzten Endes 11 des Nutzraums 9 gefördert wird und der Nutzraum 9 befüllt werden kann, ohne dass sich das zerkleinerte Material im Bereich 12 um die Förderschnecke 8 ansammelt und aufstaut.

Zwischen der Einfüllöffnung 9 und der Schreddervorrichtung 7 ist eine schaltbare Ablenkvorrichtung 13 angeordnet. Die schaltbare Ablenkvorrichtung 13 weist zwei gegenüberliegend angeordnete schwenkbar gelagerte Ablenkplatten 14 auf, die zusammen mit zwei weiteren, unbeweglich befestigten und ebenfalls gegenüberliegend angeordneten Schachtwänden 15 einen Schacht 16 für die Zuführung der aus dem Einzelbehälter 4 in den Innenraum 6 des Sammelbehälters 1 fallenden Güter bilden.

Bei der in Fig. 1 dargestellten ersten Betriebsstellung sind die beiden schwenkbar gelagerten Ablenkplatten 14 trichterförmig, jedoch im Wesentlichen senkrecht angeordnet, so dass die aus dem Einzelbehälter 4 herausfallenden vertraulichen Dokumente und Ordner der Schreddervorrichtung 7 zugeführt werden, um dort zerkleinert und anschließend über die Förderschnecke 8 in den Nutzraum 9 befördert zu werden.

Bei der in Fig. 2 abgebildeten zweiten Betriebsstellung sind die beiden schwenkbar gelagerten Ablenkplatten 14 um eine obere Schwenkachse 17 bzw. um eine untere Schwenkachse 18 aufeinander zu verschwenkt und bilden gemeinsam eine schräge Ebene bzw. eine Rutsche 19, auf der die eingefüllten Güter seitlich an der Schreddervorrichtung 7 vorbei in den Nutzraum 9 des Sammelbehälters 1 befördert werden bzw. hinab rutschen.

Durch ein Verschwenken der schwenkbar gelagerten Ablenkplatten 14 kann die schaltbare Ablenkvorrichtung 13 zwischen einer ersten Betriebsstellung, bei der die aus dem Einzelbehälter 4 herausfallenden Materialien der Schreddervorrichtung 7 zugeführt werden und einer zweiten Betriebsstellung, bei der die aus dem Einzelbehälter 4 herausfallenden Materialien über die Rutsche 19 an der Schreddervorrichtung 7 vorbei in den Nutzraum 9 befördert werden, umgeschaltet werden. Bei beiden Betriebsstellungen kann jeweils gewährleistet werden, dass der Inhalt des Einzelbehälters 4 ohne externe Mitwirkung und insbesondere ohne externe Zugriffsmöglichkeit vollständig in den Nutzraum 9 des Sammelbehälters 1 entleert wird.

Bei dem in den Fig. 1 und 2 dargestellten Ausführungsbeispiel ist seitlich neben der schaltbaren Ablenkvorrichtung 13 ein Vibrationserzeuger 20 angeordnet, der mit einer schwenkbar gelagerten Ablenkplatte 14 in Wirkverbindung steht und diese bei Bedarf in Schwingungen versetzen kann.

Die schaltbare Ablenkvorrichtung 13 kann mittels einer geeigneten Steuereinrichtung 21 automatisiert betätigt werden. Die Steuereinrichtung 21 kann mittels eines Signalgebers, der ein geeignetes Schaltsignal erzeugt, aktiviert werden. Der Signalgeber kann beispielsweise ein programmierbarer Transponder 22 sein, der an dem Einzelbehälter 4 angeordnet ist und während des Anhebens des Einzelbehälters 4 in Richtung der Einfüllöffnung 3 die Steuereinrichtung 21 in geeigneter Weise aktiviert.

Die jeweilige Betriebsstellung und eine vollständige und zuverlässige Durchführung eines Entleervorgangs des Einzelbehälters 4 können durch geeignete Sensoren, Signalgeber und beispielsweise durch eine Videokamera 23 überwacht werden. Die Steuereinrichtung 21 kann beispielsweise in Verbindung mit Signalgebern und Sensoren auch als Regeleinrichtung ausgestaltet und betrieben werden.

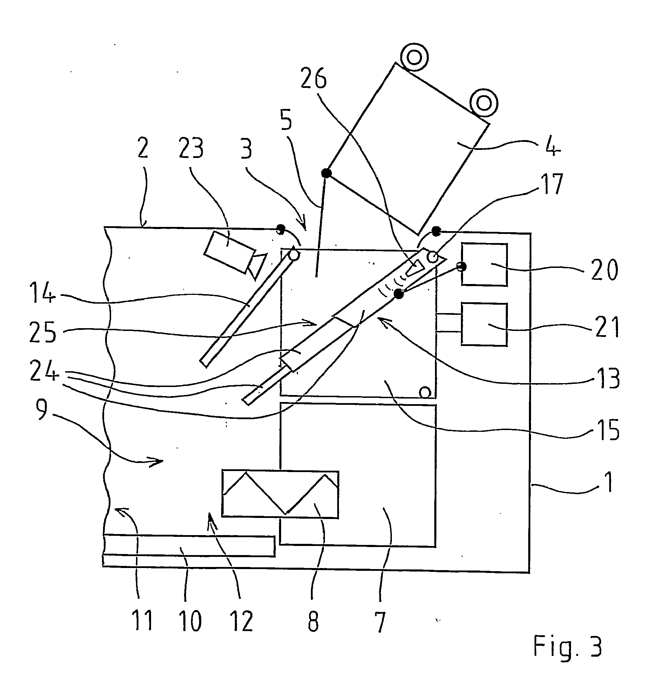

Bei dem in Fig. 3 exemplarisch dargestellten Ausführungsbeispiel weist die schaltbare Ablenkvorrichtung 13 anstelle einer schwenkbar gelagerten Ablenkplatte 14 mehrere miteinander verbundene, teleskopartig ausfahrbare wannenförmige Förderrinnenabschnitte 24 auf. In einer zweiten Betriebsstellung bilden die maximal ausgefahrenen Förderrinnenabschnitte 24 eine schräg unterhalb der Einfüllöffnung 3 verlaufende, weit in den Nutzraum 9 hineinragende Förderrinne 25, auf der die aus dem Einzelbehälter 4 herausfallenden Informationsträger bzw. Dokumente und Ordner an der Schreddervorrichtung 7 vorbei in den Nutzraum 9 des Sammelbehälters 1 hinab rutschen bzw. befördert werden.

In Fig. 3 sind lediglich schematisch Luftdüsen 26 im Bereich der Förderrinne 25 angedeutet, die bei Bedarf oder kontinuierlich während eines Einfüllvorgangs Druckluft längs der Förderrinne 25 in Richtung des Nutzraums 9 einblasen. Durch die Luftströmung kann zusätzlich oder an Stelle der Vibrationen der Förderrinne 25 eine Beförderung der Dokumente etc. längs der Förderrinne 25 in den Nutzraum 9 unterstützt werden.

## Patentansprüche

1. Sammelbehälter (1) für zu sammelnde Güter wie beispielsweise Informationsträger, insbesondere vertrauliche Dokumente und Ordner, mit einer Einfüllöffnung (3) und mit einer unterhalb der Einfüllöffnung (3) angeordneten Schreddervorrichtung (7), **dadurch gekennzeichnet, dass** zwischen der Einfüllöffnung (3) und der Schreddervorrichtung (7) eine schaltbare Ablenkvorrichtung (13) angeordnet ist, die zwischen einer ersten Betriebsstellung, bei der zu sammelnden Güter der Schreddervorrichtung (7) zugeführt werden, und einer zweiten Betriebsstellung, bei der die zu sammelnden Güter an der Schreddervorrichtung (7) vorbei dem Sammelbehälter (1) zugeführt werden, umgeschaltet werden kann.

2. Sammelbehälter (1) nach Anspruch 1, **dadurch gekennzeichnet, dass** die schaltbare Ablenkvorrichtung (13) mindestens eine schwenkbar gelagerte Ablenkplatte (14) aufweist.

3. Sammelbehälter (1) nach Anspruch 2, **dadurch gekennzeichnet, dass** die schaltbare Ablenkvorrichtung (13) zwei oder mehr schwenkbar gelagerte Ablenkplatten (14) aufweist.

4. Sammelbehälter (1) nach einem der vorangehenden Ansprüche, **dadurch gekennzeichnet, dass** die schaltbare Ablenkvorrichtung (13) mit einem Vibrationserzeuger (20) verbunden ist.

5. Sammelbehälter (1) nach einem der vorangehenden Ansprüche, **dadurch gekennzeichnet, dass** die schaltbare Ablenkvorrichtung (13) mindestens eine Luftdüse (26) zum Einblasen von Druckluft in Richtung eines Förderwegs für die zu sammelnden Güter aufweist.

6. Sammelbehälter (1) nach einem der vorangehenden Ansprüche, **dadurch gekennzeichnet, dass** die schaltbare Ablenkvorrichtung (13) elektrisch, hydraulisch oder pneumatisch betätigbar ist.

7. Sammelbehälter (1) nach einem der vorangehenden Ansprüche, **dadurch gekennzeichnet, dass** die schaltbare Ablenkvorrichtung (13) eine Steuereinrichtung (21) zur Betätigung der schaltbaren Ablenkvorrichtung (13) in Abhängigkeit von einem mittels eines Signalgebers erzeugten Schaltsignal aufweist.

8. Sammelbehälter (1) nach einem der vorangehenden Ansprüche, **dadurch gekennzeichnet, dass** die schaltbare Ablenkvorrichtung (13) eine Regeleinrichtung und Signalgeber zur Kontrolle und automatisierten Steuerung des Betriebs der schaltbaren Ablenkvorrichtung (13) aufweist.
